Europäisches Patentamt

European Patent Office

Office européen des brevets

Veröffentlichungsnummer: **0 274 644**
A1

## EUROPÄISCHE PATENTANMELDUNG

(21) Anmeldenummer: 87117774.7

(22) Anmeldetag: 01.12.87

(51) Int. Cl.4: **H02P 7/62** , A01G 3/06

(30) Priorität: 19.12.86 DE 3643558

(43) Veröffentlichungstag der Anmeldung:
20.07.88 Patentblatt 88/29

(84) Benannte Vertragsstaaten:
AT BE CH DE ES FR GB IT LI LU NL SE

(71) Anmelder: Wolf-Geräte GmbH
Gregor-Wolf-Strasse 16 Postfach 860 und
880
D-5240 Betzdorf/Sieg(DE)

(72) Erfinder: Kolb, Walter
Martin-Luther-Strasse 59
D-5240 Betzdorf/Sieg(DE)

(74) Vertreter: Koch, Günther, Dipl.-Ing. et al
Postfach 920
D-8000 München 33(DE)

(54) Elektromotorisches Antriebssystem.

(57) Die Erfindung betrifft ein elektromotorisches Antriebssystem für handgeführte Werkzeuge, insbesondere für Gartengeräte, aber auch für im Haus verwendete Werkzeuge wie Bohrmaschinen und dergleichen. Eine tragbare oder auf dem Werkzeug fixierbare Energiequelle 12 weist eine aufladbare Gleichstrombatterie 14 auf, deren Ausgang an einem Wandler 16 angeschlossen ist, der eine Elektronikschaltung enthält, die die Gleichspannung in eine Dreiphasenspannung umformt. Über eine Dreiphasenleitung 22 wird ein Drehstrommotor 18 gespeist, der das Werkzeug 20 direkt oder über eine Kupplung 28 antreibt.

# FIG. 1A

EP 0 274 644 A1

## Elektromotorisches Antriebssystem

Die Erfindung bezieht sich auf ein elektromotorisches Antriebssystem für handgeführte Werkzeuge, insbesondere für Gartengeräte mit einer Batterie als Energiequelle. Derartige batteriebetriebene Werkzeuge haben den Nachteil einer begrenzten Leistung, einer lastabhängigen Drehzahl, eines schlechten Wirkungsgrades und eines hohen Verschleißes. Die Gleichstrommotoren sind außerdem feuchtigkeitsempfindlich und erfordern eine Wartung der Kollektorbürsten und des Kollektors. Sie haben jedoch gegenüber den netzbetriebenen Geräten den Vorteil, daß sie netzunabhängig sind und kein Sicherheitsrisiko besteht. Gegenüber den Anordnungen mit Verbrennungsmotor haben sie den Vorteil eines durch Knopfdruck erreichbaren Anlaufs einer hohen Laufruhe und einer Wartungsfreiheit.

Aus diesem Grund werden heute vielfach Geräte wie z.B. Handgrasscheren oder Bohrmaschinen mit Batterie betrieben, wobei die zumeist wiederaufladbaren Batterien entweder fest in dem betreffenden Gerät eingebaut sind oder als Power-Pack in verschiedene Geräte einbaubar sind. Es ist auch bekannt, derartige "Power-Packs" tragbar und mit Anschlußleitungen auszustatten, die dann mit den betreffenden Werkzeugen zu verbinden sind.

Der Erfindung liegt die Aufgabe zugrunde, die Vorteile batteriebetriebener Antriebssysteme zu nutzen und durch Beseitigung der ihnen anhaftenden beschriebenen Nachteile zu verbessern.

Gelöst wird die gestellte Aufgabe durch die im Kennzeichnungsteil des Patentanspruchs 1 angegebenen Merkmale.

Der Erfindung liegt demgemäß die Erkenntnis zugrunde, daß durch Vereinigung zweier Antriebssysteme die gestellte Aufgabe unter Vermeidung der den einzelnen bekannten Antrieben anhaftenden Nachteilen erreicht werden kann. Drehstromsysteme sind seit vielen Jahrzehnten bekannt und Drehstrommotoren finden in der Technik auch als Kleinmotoren mit mäßiger Leistung häufig Anwendung. Es ist auch bekannt, daß Drehstrommotoren den am 220 V-Netz angeschlossenen Einphasenmotoren in mancherlei Hinsicht überlegen sind. Dies hat dazu geführt, daß man für Spezialanwendungen den Netzstrom von 220 V 50 Hz in Drehstrom über elektronische Schaltungen umgeformt hat, um die Vorteile eines Drehstrommotors ausnutzen zu können.

Durch die Erfindung wurde jedoch erstmalig erkannt, daß die heute zur Verfügung stehenden oder den verschiedensten Forderungen anpaßbare Elektronikschaltungen benutzt werden können, um drehstrombetriebene handgeführte Werkzeuge mit einer Batterie als Energiequelle zu versorgen.

Durch die erfindungsgemäße Ausbildung wird ein hoher Wirkungsgrad des Motors von ca. 80% gegenüber einem Wirkungsgrad von 50% eines Gleichstrommotors erreicht. Außerdem ergibt sich eine konstante Drehzahl unabhängig von der Belastung.

Durch das Drehfeld wird eine hohe Leistung möglich und es können Geräte mit 200 bis 400 Watt ohne weiteres angeschlossen werden. Unter Verwendung tragbarer und gängiger Batterien mäßigen Gewichtes ergibt sich dann eine Arbeitsdauer von ca. einer Stude, was in der Regel als ausreichend anzusehen ist, weil spätestens dann wieder eine Aufladung durchgeführt werden kann. Bei einem Batterie-Rasenmäher können auch Leistungen von 1W und mehr dargestellt werden, Hierbei ist das Batteriepaket auf dem Mäher montiert. Die Leistungen der Motore richten sich nach der Batteriekapazität. Aufgrund des heutigen Kenntnisstandes ist eine Stromaufnahme bis 70A möglich.

Die Erfindung hat außerdem den Vorteil, daß keine Verschleißteile wie Kollektor, Kohlebürsten und so weiter vorhanden sind. Der Motor ist feuchtigkeitsunempfindlich und braucht keine besondere Schutzisolation. Es ist keine Entstörung notwendig und der Motor hat geringe Abmessungen und ein geringes Gewicht wegen der geringeren Eisenmassen bei höherer Frequenz.

Die kurze Zuleitung vom Power-Pack zu den jeweiligen mit Motor versehenen Geräten ist nicht störend und elektrisch sicher, da überall Niederspannung vorhanden ist. Durch Verwendung des Power-Packs ist eine Einmal-Anschaffung der Energiequelle ausreichend, während alle anzuschließenden preiswerten Geräte mit diesem Power-Pack unabhängig von Netz oder Verbrennungsmotor betrieben werden können.

Bei fahrbaren größeren Geräten ist es zweckmäßig, das Power-Pack als Einheit auf dem Chassis zu montieren. Es kann aber auch hier abnehmbar sein.

Weitere zweckmäßige Ausgestaltungen der Erfindung ergeben sich aus den Unteransprüchen.

Nachstehend werden Ausführungsbeispiele der Erfindung anhand der Zeichnung beschrieben. In der Zeichnung zeigen:

Fig. 1 eine perspektivische Ansicht der Anwendung des erfindungsgemäßen Systems für eine Mehrzahl von Gartengeräten;

Fig. 1A das erfindungsgemäße System in einem Blockschaltbild;

Fig. 2 eine schematische Schnittansicht eines Gartengerätes in Gestalt eines Fadenschneiders in herkömmlicher Antriebsweise;

Fig. 3 eine der Fig. 2 entsprechende Ansicht mit einem erfindungsgemäß ausgebildeten Antrieb;

Fig. 4 die Anwendung des erfindungsgemäßen Systems in Verbindung mit einer Heckenschere;

Fig. 5 die Anwendung des erfindungsgemäßen Systems in Verbindung mit einer Motorsense.

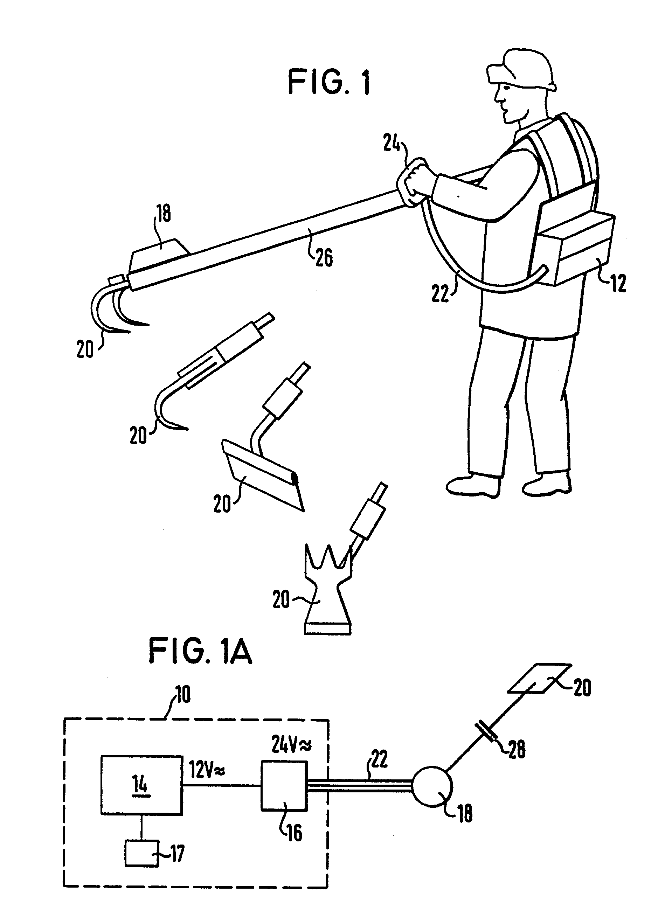

Das erfindungsgemäße System ist schematisch in Fig. 1 dargestellt. Es weist eine Energiequelle 10 (Power-Pack) auf, die in einer Tragtasche 12 untergebracht ist. Die Energiequelle enthält eine oder mehrere Gleichspannungsbatterien 14, die über ein Ladegerät 17 vom Netz wiederaufladbar ist. An den Ausgang der Batterie, die beispielsweise 12 V liegert, ist ein Wandler bzw. Umformer 16 angeschaltet, der eine elektronische Schaltung aufweist und die Gleichspannung der Batterie 14 in eine Mehrphasenspannung, insbesondere eine Dreiphasenspannung umformt. Die Ausgangsspannung des Umformers 16 ist eine Niederspannung unter 42 V und sie beträgt vorzugsweise 24 V. Die Ausgangsfrequenz kann fest eingestellt sein, sie wird aber vorzugweise regelbar gemacht, beispielsweise zwischen 50 und 500 Hz, um die Drehzahl des Motors 18, der das Arbeitswerkzeug 20 antreibt, steuern zu können. Der Wandlerausgang ist mit dem Motor über eine Dreiphasenleitung 22 verbunden, wobei der Ausgang des Umformers und/oder der Motor 18 im Dreieck oder im Stern geschaltet sind, wobei eine Sternschaltung bevorzugt ist.

Der in der Tragtasche 12 enthaltene Power-Pack kann über die Kabelleitung an einen Handgriff 24 oder eine Führungsstange 26 angeschlossen werden, die eine Leitungsführung umschließt, die nach dem am Stielende angeordneten Motoraggregat 18 führt. An den Stiel 26 können verschiedene Werkzeuge 20 über eine Kupplung 28 angeschlossen werdne, die einerseits eine Führung des Werkzeuges über den Stiel 26 ermöglicht und andererseits eine Bewegungsübertragung zwischen Motor 18 und Werkzeug bwirkt.

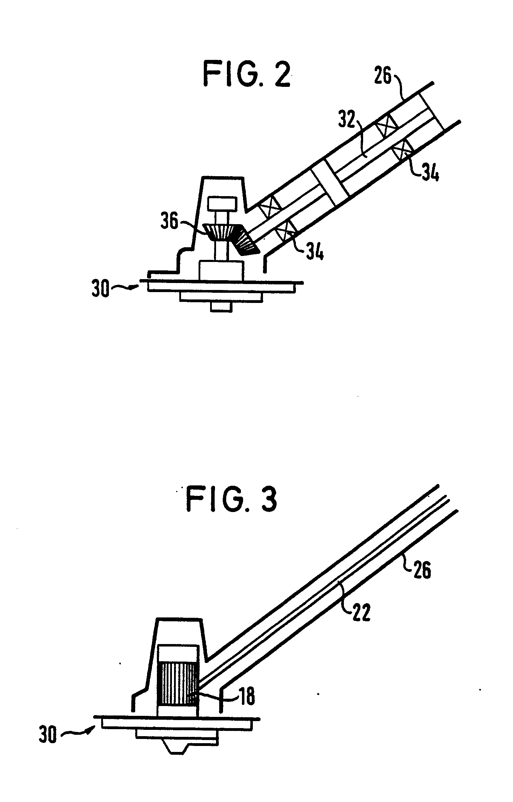

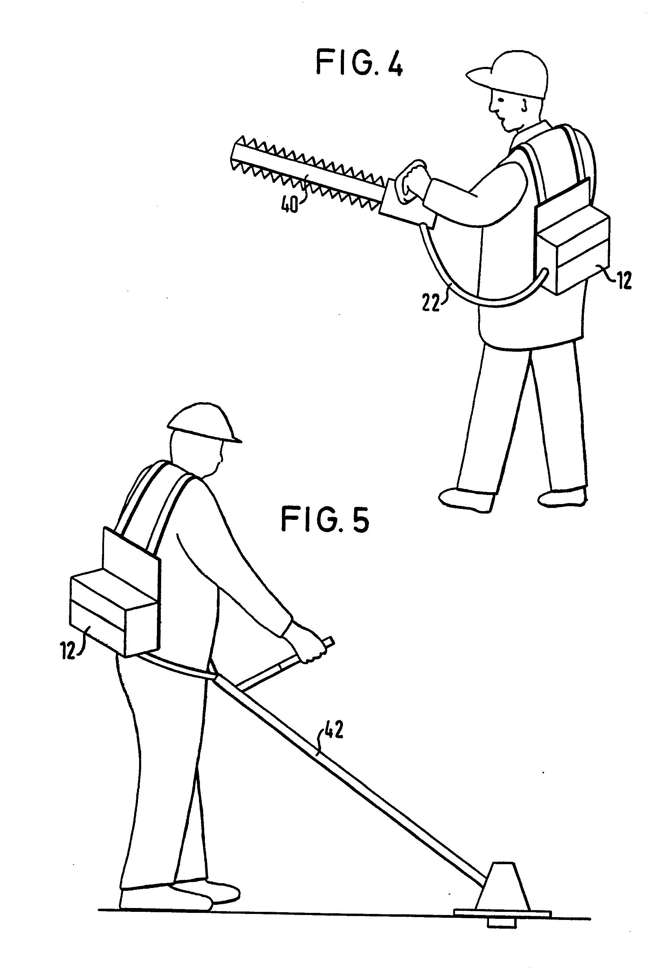

In den Figuren 2 und 3 sind Werkzeuge 30 in Gestalt eines Fadenschneiders fest an einem Führungsstiel 26 befestigt. Die Figure 2 zeigt im Prinzip die bisher übliche Ausführung mit im Stiel geführter Antriebswelle 32 mit Lagern 34 und im Werkzeuggehäuse angeordnetem Getriebe 36 das über einen Verbrennungsmotor angetrieben wird. Figur 3 zeigt die erfindungsgemäße Anordnung, bei welcher lediglich die elektrische Leitung 22 innerhalb des Stiels 26 angeordnet ist, während der Motor 18 den rotierenden Schneidkopf 38 des Fadenschneiders direkt antreibt. Die Figur 4 trägt eine entsprechende Anordnung, bei der der Motor eine Heckenschere 40 antreibt. Bei der Ausführung nach Fig. 5 wird eine Motorsense 42 durch das erfindungsgemäße System angetrieben.

Vorstehend wurden nur einige Ausführungsbeispiele der Anwendung des erfindungsgemäßen Systems beschrieben, jedoch läßt sich das System praktisch beliebig ausdehnen auf alle Arten handbetriebener Werkzeuge, wie beispielsweise auch Bohrmaschinen, Schleifmaschinen, Sägen, Hämmer und dergleichen.

Der Wandler 16, der die Gleichspannung der Batterie 14 in die Dreiphasenspannung umformt, braucht im einzelnen nicht beschrieben zu werden, da derartige elektronische Schaltungen vom Fachmann im Grundsatz ausgeführt werden können.

## Ansprüche

1. Elektromotorisches Antriebssystem für handgeführte Werkzeuge, insbesondere für Gartengeräte mit einer Batterie als Energiequelle, dadurch gekennzeichnet, daß ein aus einer Elektronikschaltung bestehender Wandler (16) den Gleichstrom in Mehrphasenstrom umformt und daß der Antriebsmotor (18) der Werkzeuge als Mehrphasenmotor ausgebildet ist.

2. System nach Anspruch 1, dadurch gekennzeichnet, daß die vom Wandler gelieferte Spannung eine Dreiphasenspannung ist, und daß der Antriebsmotor (18) ein Dreiphasen-Asynchronmotor ist.

3. System nach den Ansprüchen 1 und 2, dadurch gekennzeochnet, daß die Frequenz der vom Wandler (16) gelieferten Spannung zur Drehzahlsteuerung in einem Bereich von beispielsweise zwischen 50 und 500 Hz einstellbar ist.

4. System nach den Ansprüchen 1 bis 3, dadurch gekennzeichnet, daß die Batteriespannung und die vom Wandler gelieferte Spannung Niederspannungen unter 42 Volt sind, und daß die Batteriespannung 24 Volt und die Wandlerausgangsspannung 24 Volt beträgt.

5. System nach den Ansprüchen 1 bis 4, dadurch gekennzeichnet, daß die Wandlerelektronik und die Batterie (14) in einem Tragbaren Powerpack (12) untergebracht sind.

6. System nach Anspruch 5, dadurch gekennzeichnet, daß das Powerpack in einer Tragtasche (12) untergebracht ist, die mit Aufhängeriemen versehen ist.

7. System nach Anspruch 5, dadurch gekennzeichnet, daß das Powerpack auf einem fahrbaren Gerät, beispielsweise auf dem Rasenmäherchassis angeordnet ist.

8. System nach den Ansprüchen 1 bis 7, dadurch gekennzeichnet, daß das Powerpack (12) über eine flexible Dreiphasenleitung (22) mit einem Anschluß an einem Gerätestiel (26) oder einem Handgriff (24) verbindar ist.

9. System nach Anspruch 8, dadurch gekennzeichnet, daß das Stielende einen mit dem Anschluß verbundenen Motor (18) und eine Kupplung (38) zum Einsatz mehrerer Werkzeuge (20) aufweist, die über die Kupplung bewegungsschlüssig mit dem Motor verbindbar sind.

10. System nach einem der Ansprüche 1 bis 8, dadurch gekennzeichnet, daß der Wandler (16) als Elektronikbaustein ausgeführt ist.

## FIG. 1

## FIG. 1A

FIG. 2

26

32

34

36

34

30

FIG. 3

26

22

18

30

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 530 350 (A.F. GAWRON et al.)<br>* Spalte 3, Zeilen 29-57; Figuren 1, 6 *<br>--- | 1,2,9 | H 02 P 7/62<br>A 01 G 3/06 |
| Y | EP-A-0 195 264 (R. BOSCH)<br>* Anspruch 1 *<br>--- | 1,2,9 | |
| Y | DE-A-2 730 504 (LEAR AVIA CORP.)<br>* Anspruch 1; Figuren 1, 2 *<br>--- | 1,2,5,6<br>,8,9 | |
| Y | US-A-3 520 120 (J.R. HARDIN)<br>* Spalte 3, Zeilen 40-43; Figur 1 *<br>--- | 1,2,5,6<br>,8,9, | |
| A | DE-A-2 545 733 (E. WUNSCH)<br>* Seite 8, Zeilen 12-23; Figur 1 *<br>--- | 7 | |
| P,A | EP-A-0 214 306 (FANUC LTD)<br>* Seite 1, Zeilen 5-15 *<br>--- | 1 | |
| A | DE-U-8 502 303 (KRESS-ELEKTRIK)<br>* Anspruch 1 *<br>----- | 9 | |

| RECHERCHIERTE SACHGEBIETE (Int. Cl.4) |
|---|
| H 02 P 7/00<br>B 23 B 45/00<br>A 01 G 3/00<br>H 02 K 7/00 |

Der vorliegende Recherchenbericht wurde für alle Patentansprüche erstellt

| Recherchenort | Abschlußdatum der Recherche | Prüfer |
|---|---|---|
| BERLIN | 25-03-1988 | LEOUFFRE M. |